# EUROPEAN PATENT APPLICATION

(11) **EP 4 580 264 A1**
(43) Date of publication of application: **02.07.2025**
(21) Application number: 24221453.4
(22) Date of filing: 19.12.2024
(51) Int. Cl.: H04W 52/02

(54) **WAKE-UP SIGNAL AND WAKE-UP RECEIVER COVERAGE DETECTION**

(30) Priority: 28.12.2023 GB 202320074
(71) Applicant: Nokia Technologies Oy, 02610 Espoo (FI)
(72) Inventor: HVIID, Jan Torst, Klarup (DK); BHATOOLAUL, David, Swindon (GB); KNUDSEN, Knud, Aabybro (DK)
(74) Representative: Nokia EPO representatives

(57) **Abstract**

Wake-up signal and wake-up receiver coverage detection is provided. A method for wake-up signal and wake-up receiver coverage detection may include monitoring a current cell for a first wake-up signal beacon during a wake-up signal mode and monitoring the current cell for a second wake-up signal beacon during the wake-up signal mode for one or more iterations, upon the first wake-up signal beacon being detected. The current cell may be iteratively monitored and during each iteration a gain setting may be incrementally reduced for monitoring for the second wake-up signal beacon. The method may also include determining a coverage region of the current cell based on whether the second wake-up signal beacon is detected by the monitoring within a threshold number of iterations.

## Description

### TECHNICAL FIELD:

Some example embodiments may generally relate to mobile or wireless telecommunication systems, such as Long Term Evolution (LTE) or fifth generation (5G) new radio (NR) access technology, or 5G beyond, or other communications systems. For example, certain example embodiments may relate to wake-up signal and wake-up receiver coverage detection.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology, 5G Advanced radio access technology, or new radio (NR) access technology. Fifth generation (5G) wireless systems refer to the next generation (NG) of radio systems and network architecture. 5G network technology is mostly based on new radio (NR) technology, but the 5G (or NG) network can also build on E-UTRAN radio. It is estimated that NR may provide bitrates on the order of 10-20 Gbit/s or higher, and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the Internet of Things (IoT).

### SUMMARY:

Various exemplary embodiments may provide an apparatus including means for monitoring a current cell for a first wake-up signal beacon during a wake-up signal mode and means for monitoring the current cell for a second wake-up signal beacon during the wake-up signal mode for one or more iterations, upon the first wake-up signal beacon being detected. The current cell may be iteratively monitored and during each iteration a gain setting may be incrementally reduced for monitoring for the second wake-up signal beacon. The apparatus may also include means for determining a coverage region of the current cell based on whether the second wake-up signal beacon is detected by the monitoring within a threshold number of iterations.

Certain exemplary embodiments may provide a method including monitoring a current cell for a first wake-up signal beacon during a wake-up signal mode and monitoring the current cell for a second wake-up signal beacon during the wake-up signal mode for one or more iterations, upon the first wake-up signal beacon being detected. The current cell may be iteratively monitored and during each iteration a gain setting may be incrementally reduced for monitoring for the second wake-up signal beacon. The method may also include determining a coverage region of the current cell based on whether the second wake-up signal beacon is detected by the monitoring within a threshold number of iterations.

### BRIEF DESCRIPTION OF THE DRAWINGS:

For proper understanding of example embodiments, reference should be made to the accompanying drawings, as follows:
FIG. 1 illustrates an example of a user equipment (UE) in a sleep state transitioned to an active state by receiving a wake-up signal (WUS);
FIG. 2 illustrates an example of a table of characteristics for a separate wake-up receiver (WUR);
FIG. 3 illustrates an example of a comparison of WUS and legacy paging coverage;
FIG. 4 illustrates an example coverage area configuration in which a UE moves relative to a network node, according to various exemplary embodiments;
FIG. 5 illustrates an example of a time sequence for WUS beacons, according to certain exemplary embodiments;
FIG. 6 illustrates an example of a flowchart of procedures performed by a UE, according to some exemplary embodiments;
FIG. 7A illustrates an example of scheduling the WUS beacons, according to certain exemplary embodiments;
FIG. 7B illustrates an example of UE gain settings during each WUS beacon shown in FIG. 7A, according to various exemplary embodiments;
FIG. 8 illustrates an example configuration of a WUR with gain control, accordingly to some exemplary embodiments;
FIG. 9 illustrates an example coverage area configuration using a multi-gain approach, according to various exemplary embodiments;
FIG. 10 illustrates an example of another flowchart of procedures performed, according to certain exemplary embodiments;
FIG. 11 illustrates an example of WUS beacon sequences with different bitrates, according to some exemplary embodiments;
FIG. 12 illustrates an example of a scheduling diagram, according to various exemplary embodiments;
FIG. 13 illustrates an example of a flow diagram of a method, according to certain exemplary embodiments; and
FIG. 14 illustrates a set of apparatuses, according to various exemplary embodiments.

### DETAILED DESCRIPTION:

It will be readily understood that the components of certain example embodiments, as generally described and illustrated in the figures herein, may be arranged and designed in a wide variety of different configurations. The following is a detailed description of some exemplary embodiments of systems, methods, apparatuses, and non-transitory computer program products for wake-up signal (WUS) and wake-up receiver (WUR) coverage detection. Although the devices discussed below and shown in the figures refer to 5G/6G or Next Generation NodeB (gNB) network entities and/or devices and user equipment (UE) devices, this disclosure is not limited to only gNBs and UEs. For example, the following description may also apply to any type of network access node or entity and UE or mobile device.

It may be readily understood that the components of certain example embodiments, as generally described and illustrated in the figures herein, may be arranged and designed in a wide variety of different configurations. Different reference designations from multiple figures may be used out of sequence in the description, to refer to a same element to illustrate their features or functions. If desired, the different functions or procedures discussed herein may be performed in a different order and/or concurrently with each other. Furthermore, if desired, one or more of the described functions or procedures may be optional or may be combined. As such, the following description should be considered as illustrative of the principles and teachings of certain example embodiments, and not in limitation thereof.

In 5G/NR technology, a UE may enter an idle state/mode, such as a sleep mode or deep sleep mode, to reduce power consumption from active communications that are not necessary or desired. In idle mode, the UE reduces power consumption and improves battery life. A paging signal may be transmitted to the UE, for example, over the physical downlink shared channel (PDSCH) that "wakes up" the UE from an idle state so that the UE can prepare to receive data.

Power consumption may depend on a length of a wake-up period, such as a paging cycle. To meet battery life requirements, an extended discontinuous reception (eDRX) cycle with a large value may be used, resulting in high latency, which may not be suitable for services with requirements of both long battery life and low latency. A UE may need to periodically wake up once per DRX cycle, which may significantly increase power consumption in periods with no signaling or data traffic. If the UE may instead wake up when triggered, e.g., paging, then power consumption may be reduced. The WUS may be used to trigger a main radio and a separate receiver which has the ability to monitor WUS with ultra-low power consumption. Main radio may work for data transmission and reception, which can be turned off or set to deep sleep unless turned on. The use of WUR and WUS may reduce UE power consumption and latency.

Certain UEs may not have a continuous power/energy source, such as UEs using small rechargeable and non- rechargeable single coin cell batteries. For example, UEs without a continuous power source may be used for vertical use cases, such as sensors or actuators that are deployed for monitoring, measuring, charging, and/or the like. Batteries in UEs without a continuous power source are not typically rechargeable and may be expected to last at least few years, as described, for example, in 3^{rd} Generation Partnership Project (3GPP) technical report (TR) 38.875. UEs without a continuous power source may further include wearables, such as smart watches, rings, eHealth related devices, and medical monitoring devices, for which it may be challenging to sustain a desired battery life of up to 1-2 weeks or more using typical battery capacity.

Some UEs without a continuous power source may require a longer battery life while also providing latency-critical services, such as sensors for fire detection and extinguishing. In this situation, eDRX may not be applicable or desirable to extend the periodicity by which the UE wakes up to monitor for paging, which in turn reduces the average power consumption. The implementation of eDRX in this situation may lead to unacceptable communication latency.

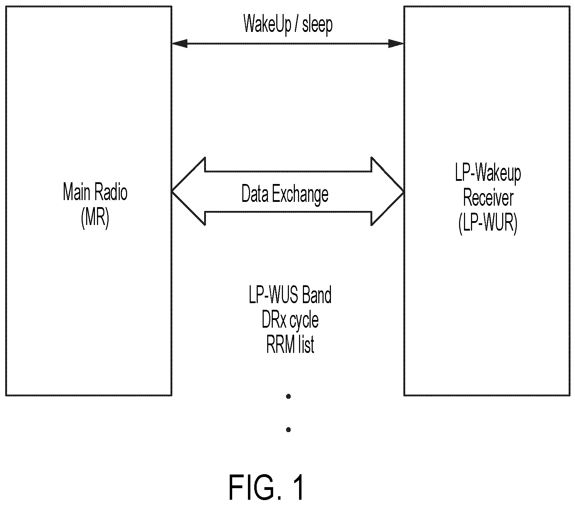

A separate low-power WUR may be used to save on UE power consumption when the UE's regular NR transceiver is in a deep sleep or a power-off state. For example, a main radio of the UE may be in a sleep (or deep sleep) mode, or even powered off, for power saving and may be activated upon receiving a WUS from the network. FIG. 1 illustrates an example of a UE in a sleep or deep sleep state, which may be transitioned to an active state by a low-power (LP) WUR receiving a WUS. The network may trigger the UE to wake-up when needed in an event-driven manner by transmitting a WUS to the UE. The LP-WUR may monitor for the WUS. When the UE receives the WUS, the LP-WUR may trigger the wake-up of the conventional (legacy) NR transceiver and enable data exchange and/or communication to be performed. The LP-WUR may wake up the main radio upon receiving the WUS, or otherwise, the main radio may remain in an OFF state or kept in a sleep/deep sleep mode. It may be assumed that the LP-WUR can be operated in an always-on manner with very low power consumption, such that the LP-WUR may consume significantly less power as compared to the NR transceiver by designing a simple WUS signal and the use of dedicated hardware for its monitoring, which may be able to receive the WUS.

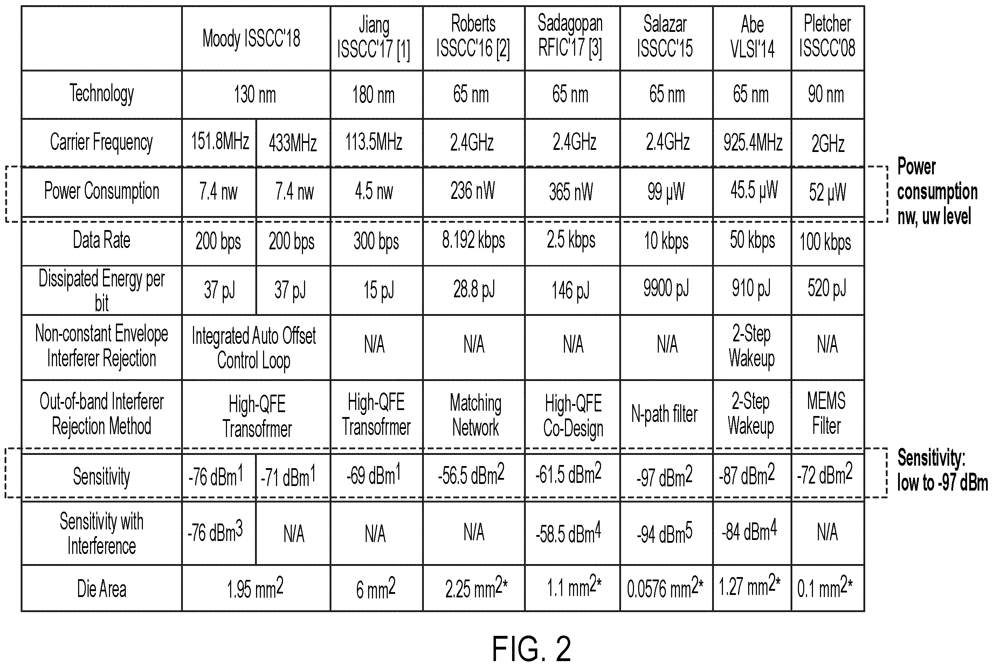

There is a trade-off between the power consumption and radio frequency (RF) sensitivity (coverage) of the WUR. The WUS receiver sensitivity may be significantly worse than the main (NR/LTE/WIFI) receiver/transceiver. FIG. 2 illustrates an example of a table of characteristics for a separate WUR which may be implemented to obtain power saving due to a lower power consumption than a legacy NR receiver. The WUR may include a bandpass filter, a low noise amplifier (LNA), enveloper detection module, integration module, comparator module, correlator module, or the like. As shown in FIG. 2, an RF sensitivity of the WUR may directly impact the coverage. The RF sensitivity of the WUR may be in range of -56.5 dBm to -97 dBm. A lower power consumption may be correlated with a reduced/worse RF sensitivity and coverage. For a main receiver in NR idle, the RF sensitivity may be -100 dBm and associated with an average power consumption of 30-50 mW. Typically, for example, the NR receiver can operate at around -120 dBm. For an LP-WUS receiver in which almost zero power is required using, for example, a passive circuit with envelope detector, the RF sensitivity may be approximately -70/80 dBm with an average power consumption of 7.4 nW. This may result in an up to 100x power saving with limited sensitivity degradation. Further examples of the tradeoff for LP receivers are shown in FIG. 2, such as, for example, using a complementary metal-oxide-semiconductor (CMOS) RF front-end with on-off-key (OOK) energy detection.

Based on the WUR characteristics in FIG. 2, WUS may have a shorter/smaller coverage than a regular NR cell and correspondingly on the network level, WUS coverage may not be as continuous as NR network coverage. When the UE is in WUS/WUR mode, it may be desirable for the UE to be aware of whether the UE remains within WUS coverage, despite possible movement by the UE. When the UE determines that it has exited WUS coverage, UE may take actions such as, for example, activating regular NR idle mode to check whether the UE is within NR coverage. Because one goal of the WUS/WUR mode may be to save battery life of the UE by using WUR and using the NR transceiver in sleep or OFF state, it may be desirable for the UE to obtain and maintain awareness of being within WUS coverage with low energy consumption. The shorter/smaller coverage of the WUS may be, for example, due to the smaller WUS receiver sensitivity, and/or the use of different modulation and coding schemes (MCS) and/or different carrier frequencies of the WUS compared to legacy paging using downlink control information (DCI) on a physical downlink control channel (PDCCH).

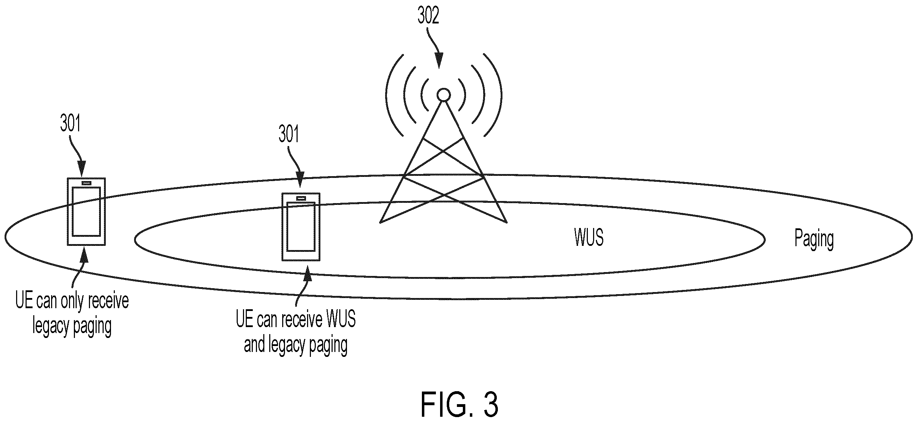

FIG. 3 illustrates an example of a comparison of WUS and legacy paging coverage. FIG. 3 shows two exemplary locations for a UE 301, which may be within a WUS coverage region of a cell of a network node, such as a gNB 302, or within a legacy paging region outside of the WUS coverage region. After the UE 301 is switched to a radio resource control (RRC) idle or inactive state/mode, the UE 301 may move within the serving cell of the gNB 302 or across different cell. The movement within or between cells may be done transparently to the network such that the network may not be aware of the specific location of the UE 301 nor a channel status (e.g., coupling loss to the serving cell's antenna(s)) between the UE 301 and gNB 302. The available location granularity for the UE 301 may be a registration area for RRC idle UEs and a radio access network (RAN) notification area for RRC inactive UEs, which in both cases can be multiple cells. The size and number of cells included in the registration area or notification area may be set by a network provider. The multiple cells may allow at least some mobility to without requiring the UE 301 to re-register in anew area, which would thereby require power consumption.

Various exemplary embodiments may provide advantages to resolve the deficiencies in the technology, such as the issues discussed above. For example, certain exemplary embodiments may advantageously provide one or more procedures for a WUS beacon arrangement that may provide a UE with a capability to determine earlier that the UE is on the proximity of a WUS coverage edge and if desirable, turn on an NR transceiver, or determine that the UE has entered and/or reentered the WUS coverage area and may enter a WUS mode and turn off the NR transceiver. Some exemplary embodiments may also provide one or more procedures for a low cost and/or low current evaluation of whether the WUR is within the WUS coverage area or near a limit/boundary of the WUS coverage area. Certain exemplary embodiments may provide one or more procedures for detecting whether a UE is within a WUS coverage area/cell or is close to the edge or boundary of the coverage area/cell or whether to change to a legacy paging mode using the main radio (MR).

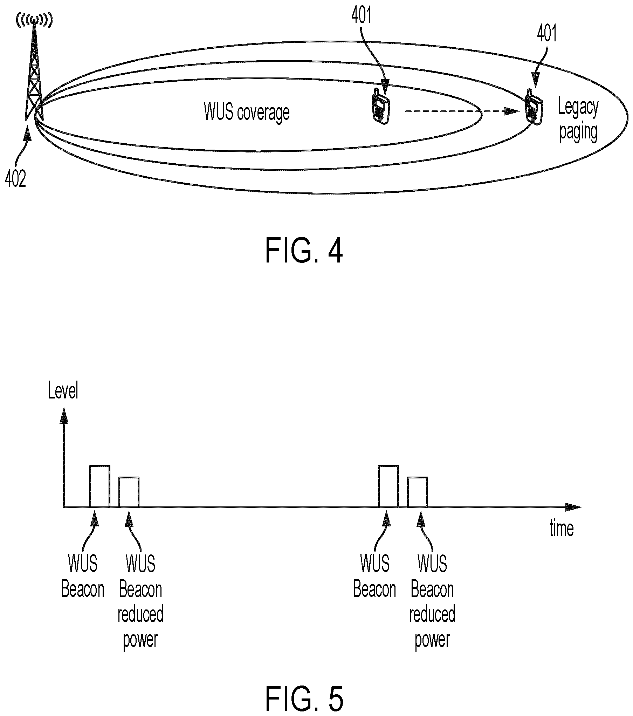

FIG. 4 illustrates an example coverage area configuration in which a UE moves relative to a network node, according to various exemplary embodiments. As shown in FIG. 4, a UE 401 may move within and beyond a WUS coverage area/cell and into a legacy paging area/cell. The WUS coverage area may be divided into two regions in which a region closest to a network node 402 may have a reduced gain as compared to again of a next-closest region from the network node 402, which may be referred to as a normal gain. The farthest or outermost region may be a legacy paging area in which legacy paging procedures may be required to communicate with the UE 401. The size of the WUS coverage may be detected or determined based on characteristics, such as a signal strength, a channel profile, interference, and/or reflections, between the UE 401 and the network node 402. During mobility/movement of the UE 401, various exemplary embodiments provide one or more procedures for detecting the coverage area to avoid loss of network connection by performing cell reselection to a cell with a stronger coverage (e.g., signal strength).

In some exemplary embodiments, a WUS beacon may have a time pattern of default beacons and reduced power beacons. An exemplary time pattern may include beacons of multiple (e.g., more than two) different power levels. The reduced power WUS beacons may have lower transmission frequency (longer periodicity) than default beacons. The UE may determine a relative location of the UE with respect to a WUS coverage edge based on a metric depending on detection of reduced power beacons. Further, the UE may determine whether the UE can reliably detect a possible wake-up signal. This may be whether a wake-up signal is detectable based on a metric depending on detection of reduced power beacons.

FIG. 5 illustrates an example of a time sequence for a WUS beacon with normal power level followed by a WUS beacon with reduced power level, according to certain exemplary embodiments. A WUS beacon signal may be sent with two power levels having a fixed sequence and interval. A first WUS beacon may be transmitted with a normal power level and a second WUS beacon may be transmitted with reduced power related to the normal power level of the first WUS beacon. The UE may decode the first WUS beacon which may verify that the UE is within one of the WUS coverage areas. Thereafter, the second WUS beacon with reduced power may be decoded to verify whether the UE is in the coverage area closest to the network node, which has reduced gain, or in the coverage area that is next-closest to the network node, which has a normal gain relative to the reduced gain. When both the first and second WUS beacons can be decoded, the UE may be determined to be within the coverage area with reduced gain. When only the first WUS beacon with normal gain is decoded and the WUS beacon with reduced power is not decoded, the UE may be determined to be within the coverage area with normal gain. When in the coverage area with normal gain, the UE may enable legacy paging procedures to help ensure the connection to the network is not lost.

According to various exemplary embodiments, there may be one or more metrics. An exemplary metric (M1) may be a ratio between detected number of reduced power WUS beacons and an expected number of reduced power WUS beacons in a defined window or a number of detected reduced power WUS beacons in the defined window (M1'). Another exemplary metric (M2) may be a ratio between the detected reduced power WUS beacons and the detected normal/default WUS beacons in a defined window or a difference between the number of detected reduced power WUS beacons and normal/default WUS beacons in the defined window (M2'). A further exemplary metric (M3) may be a number of consecutive successfully detected reduced power WUS beacons. Another exemplary metric (M4) may be a counter that has a set threshold value. The counter may be, for example, increased or decreased (e.g., by one or two etc.) when the reduced power WUS beacon is received or not received when expected. Another exemplary metric (M5) may be successful detection (e.g., one time) of the reduced power WUS beacon or failure to detect (one time) the reduced power WUS beacon when expected.

According to some exemplary embodiments, a beacon functionality and/or metric may be embedded to an actual signal design of the WUS or WUS beacon so that the signal design includes, for example, two segments which are differentiated so that the segments result in different detection probabilities. A different power level may be used in the transmitter, for example, to different parts of the sequence, when the beacon Tx power may be smaller than the Tx power for the actual WUS or default WUS beacon. When the beacon Tx energy is smaller than the Tx energy for the actual WUS or default WUS beacon, the different lengths/sequence may be used in different parts of the signal. A total combined or concatenated sequence may be used to determine the correct detection of the signal, while partial detection of the segments/parts may be used in the determination of the metric.

Based on the determined value of the metric, a movement direction of the UE may be used to select an exemplary process for controlling the mode of the UE. According to certain exemplary embodiments, the UE may be moving away from a base station or gNB and the UE may fail to detect a significant portion of reduced power WUS beacons. The metric may be selected from M1-M5 discussed herein, which may have a value below certain value.

Certain exemplary embodiments may provide that coverage detection can be done with one set of measurements in an ideal environment. However, an ideal environment with line of sight and no obstructions may not be possible in many instances, so additional checks may be needed to handle fading, reflections, non-line of sight environment, and avoid unnecessarily enabling the main radio which may cause additional power consumption. Various exemplary embodiments may provide one or more procedures for providing these additional checks to perform coverage detection.

Some exemplary embodiments may provide that the reduced power WUS beacon may have a predefined time relation or time difference to a normal/default WUS beacon. The UE may be able to predict a reduced power WUS beacon based on the detected normal/default WUS beacon. The reduced power WUS and the normal/default WUS beacon may have predetermined time instances based on which the UE learns/determines when to expect beacons. Periodicities for the reduced power WUS beacon and normal/default WUS beacon may be different, such as, for example, the periodicity for reduced power WUS beacon may be twice the periodicity of normal/default WUS beacon. A time offset between the reduced power WUS beacon pattern and the normal/default WUS beacon pattern may also be different.

In some exemplary embodiments, the UE may monitor for the WUS beacon in addition to an actual WUS that would trigger the switching to NR mode. A WUS mode configuration may contain configuration of time/frequency resources, sequence(s), time patterns(s) for normal WUS beacon, reduced power WUS beacon, and actual WUS. The WUS mode configuration may also contain a configuration of parameters related to the determination of WUS coverage edge proximity, such as a threshold value for ratio and time period or a number of WUS beacons used in the ratio determination.

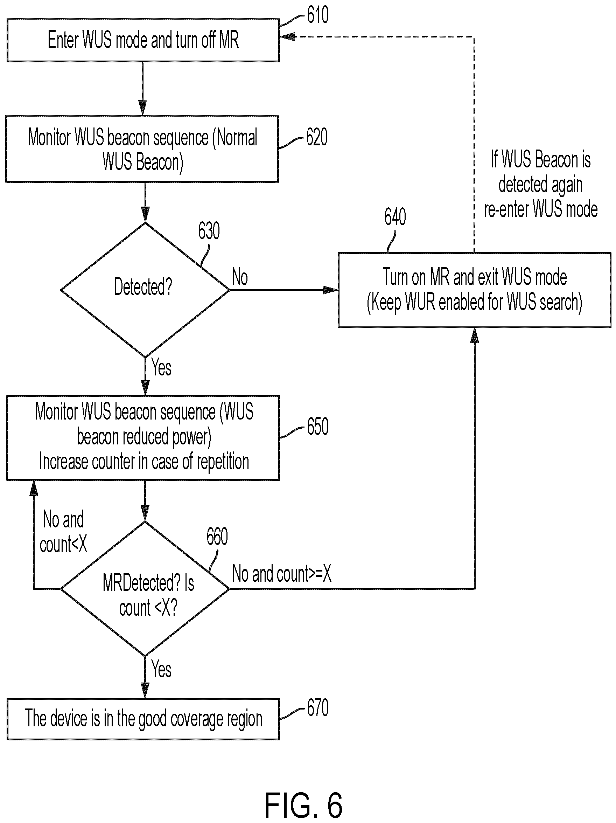

FIG. 6 illustrates an example of a flowchart of procedures performed by a UE, according to certain exemplary embodiments. At 610, the UE may enter a WUS mode after performing a handshake with a network (e.g., a network entity) and may power down or turn off a main radio (MR) for optimal power consumption. At 620, a WUR of the UE may monitor for a WUS beacon sequence with a normal power level (e.g., gain). At 630, when the UE receives or detects the WUS beacon with normal power (e.g., gain), the UE may attempt to decode the WUS beacon. If the decoding is unsuccessful, the procedure continues to step 640. At 640, the main radio may be activated/turned on to perform legacy paging procedures and the UE may exit the WUS mode. The WUR may remain enabled to allow for continued monitoring for a WUS beacon which may be able to be decoded. If the decoding is successful, the procedure continues to step 650.

At 650, the WUR of the UE may monitor for a WUS beacon sequence with a reduced power level (e.g., gain). The UE may include a counter which may be incremented if step 650 is repeated, as discussed in more detail herein. At 660, when the UE receives or detects the WUS beacon with reduced power (e.g., gain), the UE may attempt to decode the WUS beacon. If the decoding is successful and a value of the counter is less than a threshold value X, the procedure continues to step 670. At 670, when the detection and decoding are successful of the WUS beacon with reduced power, the WUR may enter a sleep mode or deep sleep mode for the next DRx cycle. When the detection and/or decoding is unsuccessful (e.g., fails), the WUR may repeat steps 650 and 660 such that the monitoring for the WUS beacon sequence for the WUS beacon with reduced power is performed for the next WUS beacon sequence. This may be iteratively repeated if the detection and decoding of the WUS beacon with reduced power continues to fail. Each repetition/attempt to detect and decode the WUS beacon with reduced power may increment the counter.

After one or more iterations or repetitions, if the detection and decoding of the WUS beacon with reduced power are successful and the value of the counter is less than the threshold value X times (repetitions), the WUR may proceed to step 670 and enter the sleep mode or deep sleep mode for the next DRx cycle. The value of the threshold X may be a dynamically updated parameter based on, for example, precious measurements, pre-knowledge of the environment or location, and/or may be scalable depending on the required power budget for the UE. For example, if the battery is low, the value of the threshold X may be set to a higher value than the value of the threshold X when the battery is full. When the detection and decoding continue to fail and the counter reaches or exceeds the value of the threshold X, the procedure returns to step 640 in which the main radio may be activated/turned on to perform legacy paging procedures and the UE may exit the WUS mode. As mentioned above, the WUR may remain enabled to allow for continued monitoring for a WUS beacon which may be able to be decoded. If a WUS beacon is detected in the future, the UE may re-enter the WUS mode at step 610.

Various exemplary embodiments may advantageously provide that the one or more procedures may provide for network-provided detection of a coverage area based on a power level of a WUS beacon by a simplistic approach. This also may allow for the size of the transient area between the WUS coverage area and the outside area using legacy paging to be fully controlled by the network power level settings.

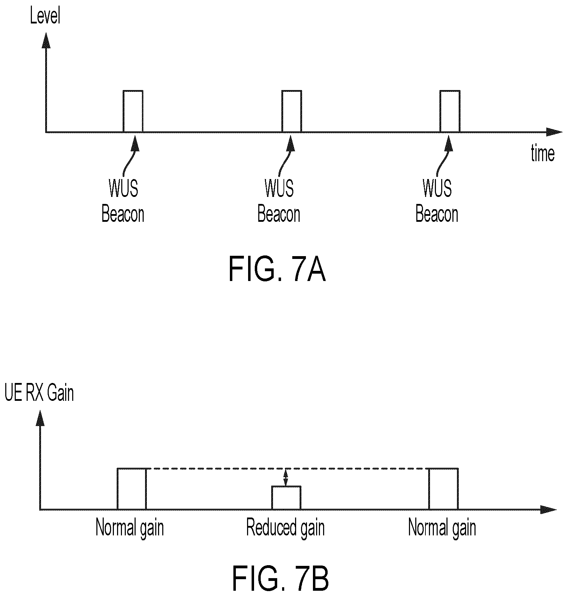

Certain exemplary embodiments may provide one or more procedures in which the network sends the WUS beacon with normal power level without sending the WUS beacon with reduced power. This may reduce or eliminate overhead (e.g., power, processing load, or the like) in the network and all range detection may be handled by the UE. In this case, the power of the WUS beacon may be iteratively reduced by changing a gain setting in the WUR. The WUS beacon with normal power may be generated in the network with normal and/or constant power level. The WUS beacon with normal power may be received by the UE with different power (e.g., gain) settings in a receiver chain. FIGs. 7A and 7B illustrate an example of scheduling the WUS beacons and the UE gain setting during each WUS beacon for range detection, according to certain exemplary embodiments.

Some exemplary embodiments provide that a multi-gain approach which may provide for the UE to estimate its location and track where the UE is moving, such as closer more accurately to the boundary/edge of the WUS coverage area or moving toward a portion of the WUS coverage area with improved coverage. Based on the location of the UE, the UE may determine whether to relax/decrease the measurements for a location with strong WUS coverage or increase the measurements when the UE is moving close to the edge/boundary of the WUS coverage area. The WUR may have a known gain or noise value and an expected sensitivity level. The UE may then have the ability to determine that when the gain is set to a maximum value or amplification and the received signal has a low signal to noise (SNR) ratio, the UE may be close/proximate to the edge of a coverage region/area. The UE may be able to decode the signal, and therefore may determine the UE is in a good coverage area.

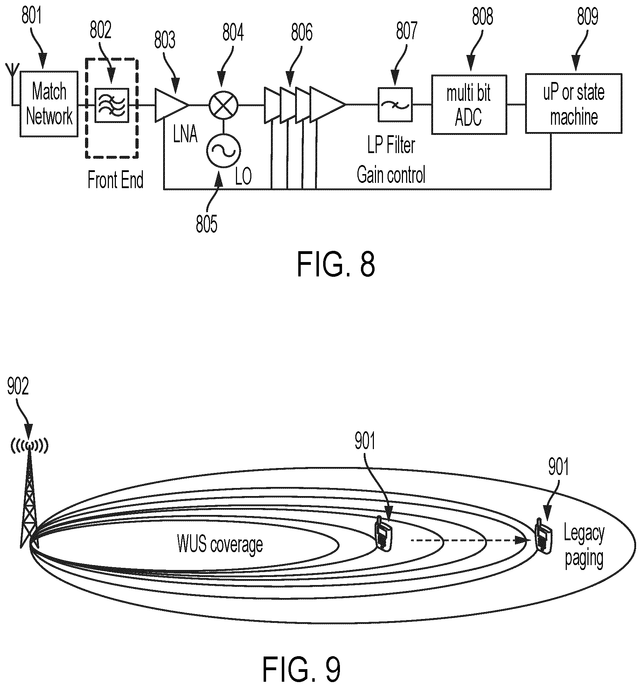

FIG. 8 illustrates an example configuration of a WUR with gain control, accordingly to some exemplary embodiments. Fig 8 illustrates a WUR architecture for connections between a uP and variable gain stages. This WUR architecture may allow for the WUR to be able to control and/or change its gain settings. As shown in FIG. 8, the WUR architecture may include a match network 801, a front-end filter 802, a low noise amplifier 803, a lamp 804, an AC voltage source 805, one or more amplifiers 806, a low-power filter for gain control 807, a multi-bit analog-to-digital converter 808, and a state machine 809.

FIG. 9 illustrates an example coverage area configuration in which a UE moves related to a network node using the multi-gain approach, according to various exemplary embodiments. As shown in FIG. 9, the WUS coverage area may be divided into sub-regions or otherwise marked based on different gain settings for each sub-region within the WUS coverage area. Each sub-region within the WUS coverage area may have a different gain setting which may then be used by the UE to determine the UE's location within or relative to the WUS coverage area.

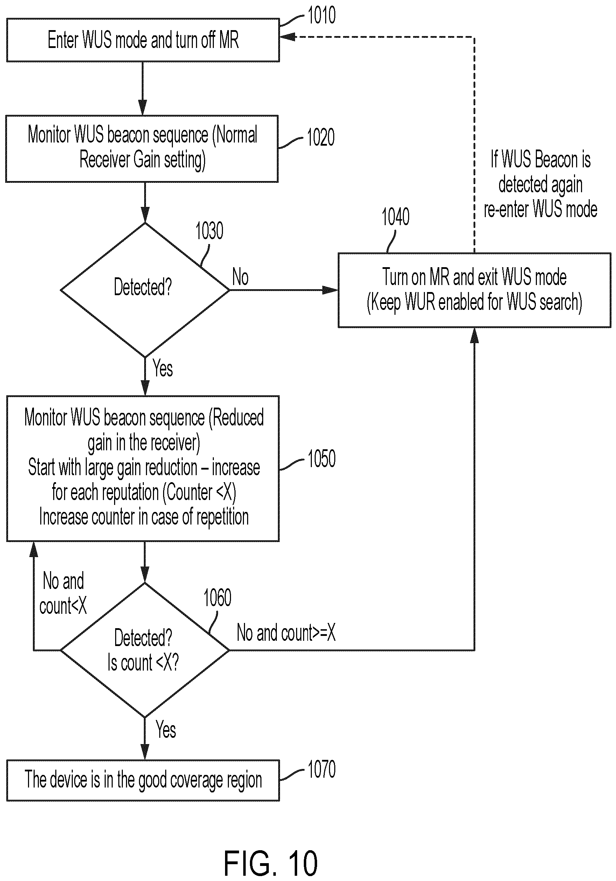

FIG. 10 illustrates an example of a flowchart of procedures performed by a UE for monitoring for a WUS beacon using a multi-gain approach, according to certain exemplary embodiments. At 1010, the UE may enter a WUS mode after performing a handshake with the network (e.g., a network entity) and may power down or turn off a main radio (MR) for optimal power consumption. At 1020, a WUR of the UE may monitor for a WUS beacon sequence with a normal power level (e.g., gain). The WUR may monitor for the WUS beacon at a specified gain setting. At 1030, when the UE receives or detects the WUS beacon with normal power (e.g., gain), the UE may attempt to decode the WUS beacon. If the decoding is unsuccessful, the procedure continues to step 1040. At 1040, the main radio may be activated/turned on to perform legacy paging procedures and the UE may exit the WUS mode. The WUR may remain enabled to allow for continued monitoring for a WUS beacon which may be able to be decoded. If the decoding is successful, the procedure continues to step 1050.

At 1050, the WUR of the UE may monitor for a WUS beacon sequence with a reduced power level (e.g., gain). For a first iteration, the WUR may be set to monitor for a specified reduced gain setting, which is less than the gain setting used in step 1020. For each subsequent iteration or repetition, the WUR may incrementally, gradually, or randomly reduce the value of the gain setting as compared to the previous iteration or repetition. One exemplary approach may be to start with a relatively high gain and reduce this gain over time until a certain limit, which may be a limit close to where the UE may not be able to decode the beacon. Another exemplary approach may start with a relatively low gain and may increase the gain over time, which may have an increased risk because the UE may lose a timing ability if the decoding of the WUS is failing for multiple iterations. A further approach may be to increase the gain incrementally if a decoding fails. The UE may include a counter which may be incremented for each iteration or repetition of step 1050. At 1060, when the UE receives or detects the WUS beacon with reduced power (e.g., gain) at the particular gain setting for the current iteration or repetition, the UE may attempt to decode the WUS beacon. If the decoding is successful and a value of the counter is less than a threshold value X, the procedure continues to step 1070. At 1070, when the detection and decoding are successful of the WUS beacon with reduced power, the WUR may enter a sleep mode or deep sleep mode for the next DRx cycle. When the detection and/or decoding is unsuccessful (e.g., fails), the WUR may repeat steps 1050 and 1060 such that the monitoring for the WUS beacon sequence for the WUS beacon with reduced power is performed for the next WUS beacon sequence, which may have a different gain setting. This may be iteratively repeated if the detection and decoding of the WUS beacon with reduced power continues to fail. Each repetition/attempt to detect and decode the WUS beacon with reduced power may increment the counter.

After one or more iterations or repetitions, if the detection and decoding of the WUS beacon with reduced power are successful and the value of the counter is less than the threshold value X times (repetitions), the WUR may proceed to step 1070 and enter the sleep mode or deep sleep mode for the next DRx cycle. The value of the threshold X may be a dynamically updated parameter based on, for example, precious measurements, pre-knowledge of the environment or location, and/or may be scalable depending on the required power budget for the UE. If or when the detection and decoding continue to fail and the counter reaches or exceeds the value of the threshold X, the procedure returns to step 640 in which the main radio may be activated/turned on to perform legacy paging procedures and the UE may exit the WUS mode. As mentioned above, the WUR may remain enabled to allow for continued monitoring for a WUS beacon which may be able to be decoded. If a WUS beacon is detected in the future, the UE may re-enter the WUS mode at step 1010.

Certain exemplary embodiments may advantageously provide that the one or more procedures may provide for using multi gain settings in the WUR mode for the UE to estimate multi-coverage areas and have the capability to determine whether transient areas between the coverage region should be changed. In case the UE is a semi-stationary device always within the transient area, some exemplary embodiments may advantageously minimize the repeated switching back and forth between WUS mode and legacy paging. By comparison with previous measurements, the UE may advantageously estimate environment changes, such as mobility and/or the like.

Some exemplary embodiments may provide one or more procedures which are similar to the procedures shown in FIG. 6 and the WUS beacon may be sent with two or more different bitrates (e.g., ON-OFF duration). These one or more procedures may have different sensitivity requirements for the different sequences. Each sequence may contain a cyclic redundancy check (CRC) to ensure correct decoding. The sequence with a lowest bitrate (e.g., longest ON-OFF duration) may be sent first and followed by the WUS beacon with a higher bitrate (e.g., shorter ON-OFF duration). These one or more procedures provide an alternative to the flow of FIG. 6 to use differentiate between the two WUS beacons using the bitrate (e.g., ON-OFF duration), instead of, or in addition to, using the power level of the WUS beacons.

Some exemplary embodiments may advantageously provide that the one or more procedures may provide for network-provided detection of a coverage area based on WUS beacon modulation/bitrate. The size of the transient area between WUS coverage area and the area using legacy paging may advantageously be fully controlled by the network.

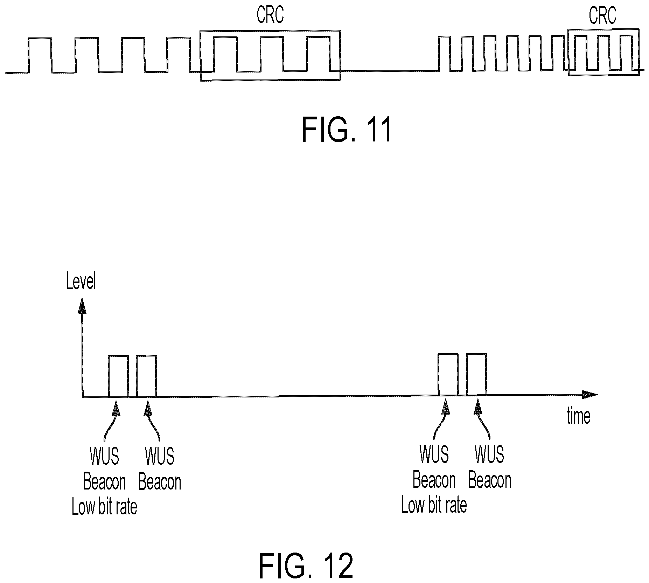

FIG. 11 illustrates an example of WUS beacon sequences with different bitrates, according to some exemplary embodiments. FIG. 12 illustrates an example of a scheduling diagram for a WUS beacon combined with a WUS beacon having a lower bitrate, according to certain exemplary embodiments. The UE may decode a first WUS beacon with a lowest bitrate and verify whether the UE is within the WUS coverage area, such as the coverage area shown in FIG. 4. The second WUS beacon with the higher bitrate (e.g., shorter ON-OFF duration) may then be decoded to verify which portion of the coverage area the UE is located within. When both the first and second WUS beacons can be decoded, the UE may be determined to be within the closest region of the coverage area, which may be considered a "safe" region. If the first WUS beacon with the lowest bitrate is decoded and the second WL1S beacon with the higher bitrate is not decoded, the UE may be determined to be in the next region of the coverage area, which is farther from the network entity of the network. The UE may then enable legacy paging to ensure the connection to the network is not lost.

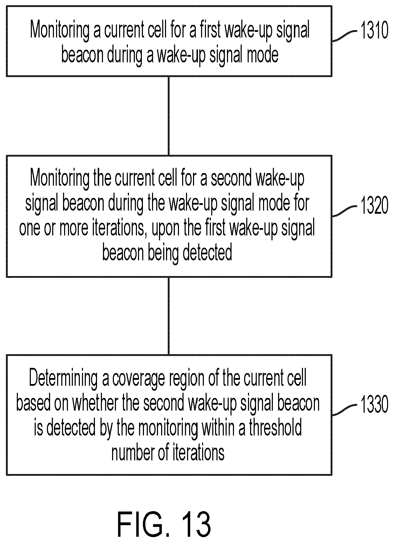

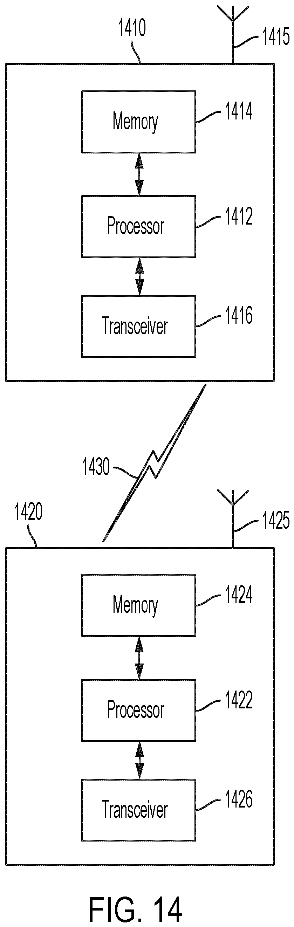

FIG. 13 illustrates an example flow diagram of a method, according to certain exemplary embodiments. In an example embodiment, the method of FIG. 13 may be performed by an entity or device connected to a network, or a group of multiple elements connected to the network in a 3GPP system, such as LTE or 5G-NR. For instance, in an exemplary embodiment, the method of FIG. 13 may be performed by a user equipment, user device, or mobile device connected to the network, such as a UE similar to apparatus 1410 illustrated in FIG. 14.

According to various exemplary embodiments, the method of FIG. 13 may include, at 1310, monitoring a current cell for a first wake-up signal beacon during a wake-up signal mode, and at 1320, monitoring the current cell for a second wake-up signal beacon during the wake-up signal mode for one or more iterations, upon the first wake-up signal beacon being detected. The current cell may be iteratively monitored and during each iteration a gain setting may be incrementally reduced for monitoring for the second wake-up signal beacon. The method may further include, at 1330, determining a coverage region of the current cell based on whether the second wake-up signal beacon is detected by the monitoring within a threshold number of iterations.

Certain exemplary embodiments may provide that the method also includes switching the apparatus into a paging mode using a main radio, when the second wake-up signal beacon is not detected by the monitoring within the threshold number of iterations. The method may also include continuing to monitor for further wake-up signal beacons during the paging mode and means for switching from the paging mode to the wake-up signal mode upon detecting at least one further wake-up signal beacon. The method may further include determining that the coverage region of the current cell is acceptable based on the second wake-up signal beacon being detected by the monitoring within the threshold number of iterations.

Some exemplary embodiments may provide that a power level of the second wake-up signal beacon may be less than a power level of the first wake-up signal beacon. The monitoring for the first wake-up signal beacon and the monitoring for the second wake-up signal beacon may include detecting and decoding the first or second wake-up signal beacon. When the monitoring for the second wake-up signal beacon does not detect the second wake-up signal beacon and a number of iterations is less than the threshold number of iterations, the monitoring for the second wake-up signal beacon may be repeated. The method also includes incrementing a counter to count the number of iterations to detect the second wake-up signal beacon. The first wake-up signal beacon and the second wake-up signal beacon may have different bitrates. The coverage region may include a plurality of gain settings, and as the gain setting is incrementally changed to be one or more of the plurality of gain settings, the UE may be configured to determine at least a relative position or a speed of the UE relative to a boundary of the coverage region.

FIG. 14 illustrates a set of apparatuses 1410 and 1420 according to various exemplary embodiments. In the various exemplary embodiments, the apparatus 1410 may be an element in a communications network or associated with such a network, such as a UE, RedCap UE, SL UE, mobile equipment (ME), mobile station, mobile device, stationary device, IoT device, or other device. For example, UE 401/901 according to various exemplary embodiments discussed above may be an example of apparatus 1410. It should be noted that one of ordinary skill in the art would understand that apparatus 1410 may include components or features not shown in FIG. 14. In addition, apparatus 1420 may be a network, network entity, element of the core network, or element in a communications network or associated with such a network, such as a base station, an NE, or a gNB. For example, the gNB 402/902 according to various exemplary embodiments as discussed above may be an example of apparatus 1420. It should be noted that one of ordinary skill in the art would understand that apparatus 1420 may include components or features not shown in FIG. 14.

In some example embodiments, apparatuses 1410 and/or 1420 may include one or more processors, one or more computer-readable storage medium (for example, memory, storage, or the like), one or more radio access components (for example, a modem, a transceiver, or the like), and/or a user interface. In some example embodiments, apparatuses 1410 and/or 1420 may be configured to operate using one or more radio access technologies, such as GSM, LTE, LTE-A, NR, 5G, WLAN, WiFi, NB-IoT, Bluetooth, NFC, MulteFire, and/or any other radio access technologies.

As illustrated in the example of FIG. 14, apparatuses 1410 and/or 1420 may include or be coupled to processors 1412 and 1422, respectively, for processing information and executing instructions or operations. Processors 1412 and 1422 may be any type of general or specific purpose processor. In fact, processors 1412 and 1422 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 1412 (and 1422) for each of apparatuses 1410 and/or 1420 is shown in FIG. 14, multiple processors may be utilized according to other example embodiments. For example, it should be understood that, in certain example embodiments, apparatuses 1410 and/or 1420 may include two or more processors that may form a multiprocessor system (for example, in this case processors 1412 and 1422 may represent a multiprocessor) that may support multiprocessing. According to certain example embodiments, the multiprocessor system may be tightly coupled or loosely coupled to, for example, form a computer cluster).

Processors 1412 and 1422 may perform functions associated with the operation of apparatuses 1410 and/or 1420, respectively, including, as some examples, precoding of antenna gain/phase parameters, encoding and decoding of individual bits forming a communication message, formatting of information, and overall control of the apparatuses 1410 and/or 1420, including processes illustrated in FIGs. 4-13.

Apparatuses 1410 and/or 1420 may further include or be coupled to memory 1414 and/or 1424 (internal or external), respectively, which may be coupled to processors 1412 and 1422, respectively, for storing information and instructions that may be executed by processors 1412 and 1422. Memory 1414 (and memory 1424) may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 1414 (and memory 1424) can be comprised of any combination of random access memory (RAM), read only memory (ROM), static storage such as a magnetic or optical disk, hard disk drive (HDD), or any other type of non-transitory machine or computer readable media. The instructions stored in memory 1414 and memory 1424 may include program instructions or computer program code that, when executed by processors 1412 and 1422, enable the apparatuses 1410 and/or 1420 to perform tasks as described herein.

In certain example embodiments, apparatuses 1410 and/or 1420 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processors 1412 and 1422 and/or apparatuses 1410 and/or 1420 to perform any of the methods illustrated in FIGs. 4-13.

In some exemplary embodiments, apparatuses 1410 and/or 1420 may also include or be coupled to one or more antennas 1415 and 1425 for receiving a downlink signal and for transmitting via an uplink from apparatus 1410 and apparatus 1420, respectively. Apparatuses 1410 and/or 1420 may further include transceivers 1416 and 1426, respectively, configured to transmit and receive information. The transceiver 1416 and 1426 may also include a radio interface that may correspond to a plurality of radio access technologies including one or more of GSM, LTE, LTE-A, 5G, NR, WLAN, NB-IoT, Bluetooth, BT-LE, NFC, RFID, UWB, or the like. The radio interface may include other components, such as filters, converters (for example, digital-to-analog converters or the like), symbol demappers, signal shaping components, an Inverse Fast Fourier Transform (IFFT) module, or the like, to process symbols, such as OFDMA symbols, carried by a downlink or an uplink.

For instance, transceivers 1416 and 1426 may be respectively configured to modulate information on to a carrier waveform for transmission and demodulate received information for further processing by other elements of apparatuses 1410 and/or 1420. In other example embodiments, transceivers 1416 and 1426 may be capable of transmitting and receiving signals or data directly. Additionally or alternatively, in some example embodiments, apparatuses 1410 and/or 1420 may include an input and/or output device (I/O device). In certain example embodiments, apparatuses 1410 and/or 1420 may further include a user interface, such as a graphical user interface or touchscreen.

In certain example embodiments, memory 1414 and memory 1424 store software modules that provide functionality when executed by processors 1412 and 1422, respectively. The modules may include, for example, an operating system that provides operating system functionality for apparatuses 1410 and/or 1420. The memory may also store one or more functional modules, such as an application or program, to provide additional functionality for apparatuses 1410 and/or 1420. The components of apparatuses 1410 and/or 1420 may be implemented in hardware, or as any suitable combination of hardware and software. According to certain example embodiments, apparatus 1410 may optionally be configured to communicate with apparatus 1420 via a wireless or wired communications link 1430 according to any radio access technology, such as NR.

According to certain example embodiments, processors 1412 and 1422, and memory 1414 and 1424 may be included in or may form a part of processing circuitry or control circuitry. In addition, in some example embodiments, transceivers 1416 and 1426 may be included in or may form a part of transceiving circuitry.

According to various exemplary embodiments, the apparatus 1410 may include at least the processor 1412 and at least the memory 1414, as shown in FIG. 14. The memory may store instructions that, when executed by the processor, cause the apparatus 1410 to monitor a current cell for a first wake-up signal beacon during a wake-up signal mode and monitor the current cell for a second wake-up signal beacon during the wake-up signal mode for one or more iterations, upon the first wake-up signal beacon being detected. The current cell may be iteratively monitored and during each iteration a gain setting may be incrementally reduced for monitoring for the second wake-up signal beacon. The apparatus 1410 may also be caused to determine a coverage region of the current cell based on whether the second wake-up signal beacon is detected by the monitoring within a threshold number of iterations.

In some exemplary embodiments, an apparatus (e.g., apparatus 1410 and/or apparatus 1420) may include means for performing a method, a process, or any of the variants discussed herein. Examples of the means may include one or more processors, memory, controllers, transmitters, receivers, and/or computer program code for causing the performance of the operations.

Certain exemplary embodiments may be directed to an apparatus 1410 that includes means for monitoring a current cell for a first wake-up signal beacon during a wake-up signal mode and means for monitoring the current cell for a second wake-up signal beacon during the wake-up signal mode for one or more iterations, upon the first wake-up signal beacon being detected. The current cell may be iteratively monitored and during each iteration a gain setting may be incrementally reduced for monitoring for the second wake-up signal beacon. The apparatus 1410 may also include means for determining a coverage region of the current cell based on whether the second wake-up signal beacon is detected by the monitoring within a threshold number of iterations.

As used herein, the term "circuitry" may refer to hardware-only circuitry implementations (for example, analog and/or digital circuitry), combinations of hardware circuits and software, combinations of analog and/or digital hardware circuits with software/firmware, any portions of hardware processor(s) with software, including digital signal processors, that work together to cause an apparatus (for example, apparatus 1410 and/or 1420) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor or multiple processors, or portion of a hardware circuit or processor, and the accompanying software and/or firmware. The term circuitry may also cover, for example, a baseband integrated circuit in a server, cellular network node or device, or other computing or network device.

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (for example, apparatuses 1410 and/or 1420), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "cell", "node", "gNB", or other similar language throughout this specification may be used interchangeably.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

One having ordinary skill in the art will readily understand that the disclosure as discussed above may be practiced with procedures in a different order, and/or with hardware elements in configurations which are different than those which are disclosed. Therefore, although the disclosure has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) technology and/or sixth generation (6G) technology.

### Partial Glossary:

- 3GPP: 3rd Generation Partnership Project
- 5G: 5th Generation
- DCI: Downlink Control Information
- DL: Downlink
- DRX: Discontinuous Reception
- eDRX: Extended Discontinuous Reception
- EMBB: Enhanced Mobile Broadband
- gNB: 5G or Next Generation NodeB
- LNA: Low Noise Amplifier
- LR: Low-power Radio
- LTE: Long Term Evolution
- MCS: Modulation Coding Scheme
- MR: Main Radio
- NR: New Radio
- OOK: On-Off Key
- PDCCH: Physical Downlink Control Channel
- PDSCH: Physical Downlink Shared Channel
- RAN: Radio Access Network
- RedCap: Reduced Capability
- RF: Radio Frequency
- RRC: Radio Resource Control
- UE: User Equipment
- UL: Uplink
- URLLC: Ultra Reliable Low Latency Communication
- WUR: Wake-Up Receiver
- WUS: Wake-Up Signal

## Claims

1. An apparatus, comprising:
means for monitoring a current cell for a first wake-up signal beacon during a wake-up signal mode;
means for monitoring the current cell for a second wake-up signal beacon during the wake-up signal mode for one or more iterations, upon the first wake-up signal beacon being detected, wherein the current cell is iteratively monitored and during each iteration a gain setting is incrementally reduced for monitoring for the second wake-up signal beacon; and
means for determining a coverage region of the current cell based on whether the second wake-up signal beacon is detected by the monitoring within a threshold number of iterations.

2. The apparatus according to claim 1, further comprising:
means for switching the apparatus into a paging mode using a main radio, when the second wake-up signal beacon is not detected by the monitoring within the threshold number of iterations.

3. The apparatus according to claim 2, further comprising:
means for continuing to monitor for further wake-up signal beacons during the paging mode; and
means for switching from the paging mode to the wake-up signal mode upon detecting at least one further wake-up signal beacon.

4. The apparatus according to claim 1, further comprising:
means for determining that the coverage region of the current cell is acceptable based on the second wake-up signal beacon being detected by the monitoring within the threshold number of iterations.

5. The apparatus according to any one of claims 1-4, wherein a power level of the second wake-up signal beacon is less than a power level of the first wake-up signal beacon.

6. The apparatus according to any one of claims 1-5, wherein the monitoring for the first wake-up signal beacon and the monitoring for the second wake-up signal beacon comprises detecting and decoding the first or second wake-up signal beacon.

7. The apparatus according to any one of claims 1-6, wherein, when the monitoring for the second wake-up signal beacon does not detect the second wake-up signal beacon and a number of iterations is less than the threshold number of iterations, the monitoring for the second wake-up signal beacon is repeated.

8. The apparatus according to claim 7, further comprising:
means for incrementing a counter to count the number of iterations to detect the second wake-up signal beacon.

9. The apparatus according to any one of claims 1-8, wherein the first wake-up signal beacon and the second wake-up signal beacon have different bitrates.

10. The apparatus according to any one of claims 1-9, wherein:
the coverage region comprises a plurality of gain settings; and
as the gain setting is incrementally changed to be one or more of the plurality of gain settings, the apparatus is configured to determine at least a relative position or a speed of the apparatus relative to a boundary of the coverage region.

11. A method, comprising:
monitoring a current cell for a first wake-up signal beacon during a wake-up signal mode;
monitoring the current cell for a second wake-up signal beacon during the wake-up signal mode for one or more iterations, upon the first wake-up signal beacon being detected, wherein the current cell is iteratively monitored and during each iteration a gain setting is incrementally reduced for monitoring for the second wake-up signal beacon; and
determining a coverage region of the current cell based on whether the second wake-up signal beacon is detected by the monitoring within a threshold number of iterations.

12. The method according to claim 11, further comprising:
switching the apparatus into a paging mode using a main radio, when the second wake-up signal beacon is not detected by the monitoring within the threshold number of iterations.

13. The method according to claim 12, further comprising:
continuing to monitor for further wake-up signal beacons during the paging mode; and
switching from the paging mode to the wake-up signal mode upon detecting at least one further wake-up signal beacon.

14. The method according to claim 11, further comprising:
determining that the coverage region of the current cell is acceptable based on the second wake-up signal beacon being detected by the monitoring within the threshold number of iterations.

15. The method according to any one of claims 11-14, wherein a power level of the second wake-up signal beacon is less than a power level of the first wake-up signal beacon.
